# FASCICULE DE BREVET EUROPEEN

(11) **EP 0 839 644 B1**
(45) Date de publication et mention de la délivrance du brevet: **25.02.2004**
(21) Numéro de dépôt: 97402591.8
(22) Date de dépôt: 31.10.1997
(51) Int. Cl.: B32B 17/10, C03C 27/12, B60J 1/02, H05B 3/84

(54) **Vitrage feuilleté réfléchissant des rayonnements thermiques et procédé pour sa fabrication**
Wärmestrahlenreflektierende Verbundglasscheibe und Verfahren zu ihrer Herstellung
Heat reflecting laminated glass and process for making it

(30) Priorité: 31.10.1996 DE 19644004
(43) Date de publication de la demande: 06.05.1998
(73) Titulaire: SAINT-GOBAIN VITRAGE, 92400 Courbevoie (FR)
(72) Inventeur: Mâuser, Helmut, 6369 SJ Simpelveld (NL); Immerschitt, Stefan, 52134 Herzogenrath (DE)
(74) Mandataire: Renous Chan, Véronique

(56) Documents cités:
- EP-A- 0 394 089
- US-A- 5 131 967
- US-A- 5 320 893

## Description

La présente invention concerne un procédé pour la fabrication d'un vitrage feuilleté réfléchissant des rayons thermiques, en particulier pour automobiles, ou tout autre type de véhicules, moyen de locomotion terrestre, aérien ou maritime, constitué d'au moins deux feuilles de verre et d'au moins une feuille de polymère disposée entre ces feuilles de verre, adhérant à ces dernières, notamment par collage, et pourvue d'au moins une couche fonctionnelle du type métallique réfléchissant le rayonnement infrarouge, qui s'étend au moins le long d'une partie de la périphérie du vitrage jusqu'à son bord.

Dans le cas de vitrages feuilletés de ce type se pose le problème bien connu qu'au fil du temps, des phénomènes de corrosion, gênants du point de vue optique, apparaissent au niveau du bord de la couche métallique, surtout s'il s'agit d'une couche d'argent, et progressent vers l'intérieur. Différentes solutions sont connues pour empêcher ce processus de corrosion.

Un procédé pour empêcher la corrosion de la couche d'argent, connu par exemple d'après le document EP-A-0 391 165, consiste à munir la surface périphérique du vitrage feuilleté d'une matière de scellement résistant aux conditions atmosphériques. Ce procédé connu convient certes pour des vitrages feuilletés qui sont enserrés, au niveau du bord, dans un cadre périphérique, de telle sorte que le scellement soit recouvert par le cadre. Toutefois, ce procédé convient moins pour des vitrages feuilletés, dans lesquels les bords des feuilles de verre sont à nu à l'état monté. Dans ce cas, les matières de scellement sont en effet non seulement visibles, mais aussi exposées à des sollicitations mécaniques et aux influences météorologiques, qui peuvent conduire à une altération voire, dans certaines circonstances, à une destruction des couches de scellement.

Il est connu d'après le document DE 2344616 A1 d'éviter le risque de corrosion au niveau du bord par le fait que la couche d'argent présente sur la pellicule de polymère, qui s'étend en tant que telle jusqu'à la surface périphérique du vitrage feuilleté, est enlevée au niveau du bord sur une largeur de 3 à 12 mm. L'enlèvement de la couche peut s'effectuer par voie mécanique ou chimique. Dans cette zone marginale, dans laquelle la couche est enlevée, la couche de colle qui est en particulier une couche thermoplastique de polyvinylbutyral s'unit directement à la surface de la feuille de polymère portant la couche d'argent. Ce procédé ne peut cependant pas être exécuté si l'on utilise, lors de la fabrication des vitrages feuilletés, des feuilles de polymères revêtues, qui sont déjà pourvues sur leur face revêtue de la couche de colle. L'utilisation de ces stratifiés est toutefois avantageuse parce que, de la sorte, d'une part le procédé de fabrication est simplifié et, d'autre part, la couche fonctionnelle réfléchissant le rayonnement infrarouge est protégée des dégradations pendant le procédé de fabrication.

Pour obtenir, dans le cas de l'utilisation de stratifiés faits d'une feuille de polymère revêtue et de couches de colle, (des couches favorisant l'adhérence du polymère ainsi fonctionnalisé avec les substrats verriers), la protection nécessaire contre la corrosion, il est connu d'après le document DE 19503510 A1 de découper dans le stratifié un morceau plan plus petit de 1 à 10 mm au niveau du bord par rapport aux feuilles de verre de fabriquer en respectant cette distance marginale, un préensemble à partir de feuilles de verre et du stratifié, de remplir, dans le cas du préensemble, la fente marginale résiduelle en injectant une masse fondue du polymère formant les couches de colle et de fabriquer l'ensemble final au cours d'un traitement suivant en autoclave. Ce procédé connu est cependant relativement coûteux.

L'invention a pour but de procurer un procédé pour la fabrication d'un vitrage feuilleté du type mentionné dans le préambule qui, d'une part, soit protégé contre la corrosion qui progresse depuis le bord, de la couche réfléchissant le rayonnement infrarouge, d'autre part, ne présente pas les inconvénients connus des solutions connues et en particulier, puisse être fabriqué en utilisant des stratifiés de polymère, et dont la fabrication n'implique qu'un surcroît de coût relativement faible. On entend au sens de l'invention par « stratifié » » la superposition d'un certain nombre de feuilles à base de polymère(s) dont au moins une revêtue sur au moins une de ses faces d'au moins une couche fonctionnelle, et au moins une autre favorisant, autorisant l'adhérence, le collage de cette feuille fonctionnalisée à au moins un substrat verrier.

La (ou les) feuille(s) de polymère que l'on fonctionnalise est généralement à base de polymère flexible, usuellement transparent ou essentiellement transparent, notamment à base de polyester linéaire tel que le polyéthylène téréphtalate (PET), de polycarbonate, de polypropylène, de polyéthylène, de polysulfure, de polyéthersulfure ou de polyméthacrylate.

La (ou les) feuille(s) de polymère permettant d'assembler la feuille de polymère fonctionnalisée à au moins un substrat de type verrier est généralement choisie à base de polymère thermoplastique, du type polyvinylbutyral (PVB) ou de polyuréthane (PU).

La couche fonctionnelle est généralement métallique, en argent par exemple ou alliage métallique, notamment à base d'argent. Elle peut aussi être en nitrure métallique du type nitrure de titane ou de zirconium.

Il peut y avoir plusieurs couches fonctionnelles, à base d'argent notamment, qui se trouvent intercalées par des revêtements en matériau diélectique. On peut se reporter par exemple aux brevets EP-438357 décrivant une couche fonctionnelle à base de Ta, EP-0511 901 décrivant une couche fonctionnelle à base de NiCr, ou aux brevets EP-506 507, EP-611 213, EP 636 587, EP-678 484, EP-718 250 pour des empilements à une couche d'argent, ou EP-638 528 pour des empilements à deux couches d'argent.

Dans le cas du vitrage feuilleté conforme à l'invention, contrairement à toutes les solutions connues, on s'est accomodé volontairement d'une corrosion de la couche d'argent dans la zone marginale extérieure extrême. Grâce à la ligne de séparation étroite, il est cependant acquis que le processus de corrosion s'arrête au niveau de cette ligne de séparation. En l'occurence, et c'est étonnant, il s'est avéré que l'effet de barrage de la ligne de séparation de l'élément s'utilise même si la ligne de séparation est étroite et, en tant que telle, à peine visible à l'oeil nu. Si la bande marginale extérieure extrême est corrodée, on peut certes la reconnaître de par son changement de couleur, mais on peut la couvrir par des mesures appropriées, de telle sorte qu'elle ne soit pas visible en tant que telle.

Une mesure particulièrement simple pour couvrir la bande marginale sensible à la corrosion consiste en ce qu'au moins une des deux feuilles de verre est pourvue d'un cadre décoratif d'une encre opaque, de préférence d'une encre à cuire noire ou d'un émail opacifiant.

La fabrication des vitrages feuilletés conformes à l'invention s'effectue de telle façon que, dans le cas de l'utilisation d'un stratifié avec une couche de polymère recouvrant la couche réfléchissant le rayonnement infrarouge, la ligne de séparation soit réalisée conformément au tracé souhaité à l'aide d'un faisceau laser, traversant la couche métallique réfléchissant le rayonnement infrarouge, à l'intérieur du stratifié sans influencer les couches de polymère voisines.

Il est certes connu en principe de structurer des couches multiples, réfléchissant le rayonnement infrarouge, de la technique en question ici avec une couche fonctionnelle en argent à l'aide d'un faisceau laser. Un tel procédé est décrit, par exemple, dans le document DE 19508042 A1. Dans le cas des procédés connus, les couches en question se trouvent cependant directement sur une surface de verre libre, de sorte que d'éventuels produits réactionnels peuvent se dégager. Dans le cas du procédé conforme à l'invention, par contre, aucun produit réactionnel ne peut se dégager. De plus, la couche réfléchissant le rayonnement infrarouge est intercalée entre des couches de polymère, qui doivent être traversées par le faisceau laser sans pouvoir être endommagées de manière visible par ce dernier.

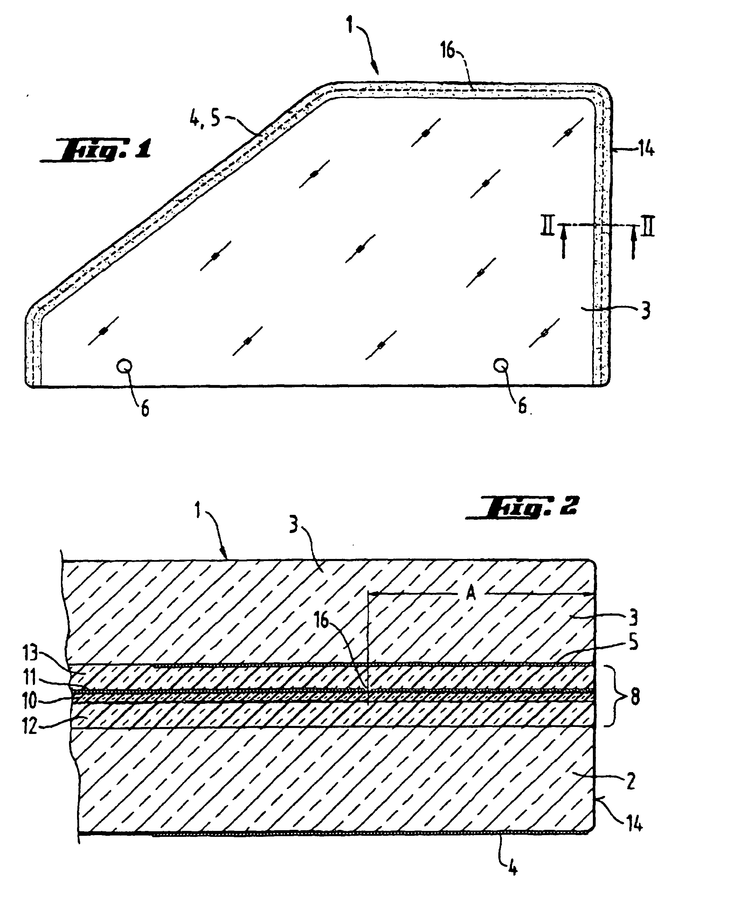

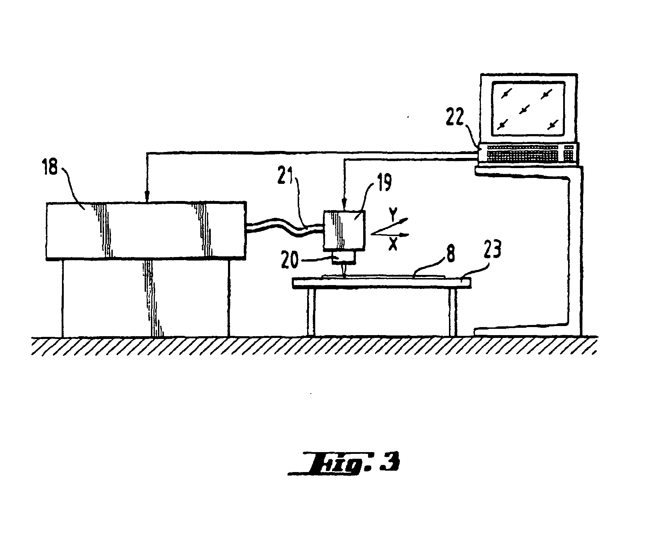

L'invention sera expliquée ci-après plus en détail à l'aide de deux exemples de réalisation avec référence aux dessins annexés qui représentent :
□ **figure 1** : une vitre de portière réglable en hauteur conçue conformément à l'invention;
□ **figure 2** : une vue en coupe, à plus grande échelle, suivant la ligne II-II de la figure 1 et,
□ **figure 3** : montre un dispositif pour la réalisation de la ligne de séparation dans la couche réfléchissant le rayonnement infrarouge.

Pour obtenir une protection optimale contre l'échauffement des automobiles par le rayonnement solaire, il est avantageux de doter non seulement le pare-brise, mais également la lunette arrière et les vitres latérales de couches réfléchissant le rayonnement infrarouge. Comme le problème de la corrosion marginale de la couche fonctionnelle se pose surtout dans le cas de vitres ayant des bords à nu, et comme les bords à nu sont inévitables, en particulier dans le cas des vitres de portières à manivelle, une telle vitre de portière à manivelle est représentée, à titre d'exemple pour un vitrage feuilleté conforme à l'invention, sur les figures 1 et 2. Evidemment, toutes les autres vitres d'une automobile peuvent également être conçues de manière correspondante avec le même résultat.

Le vitrage feuilleté 1 conçu comme une vitre de portière à manivelle comprend une feuille de verre intérieure 2 tournée vers l'habitacle et une feuille de verre extérieure 3. Les feuilles de verre 2 et 3 sont chacune faites, par exemple, de verre flotté de 2 mm d'épaisseur et elles sont partiellement trempées pour élever leur résistance mécanique. Les feuilles de verre 2 et 3 sont chacune pourvues d'une bande marginale décorative opaque 4 et 5, respectivement, imprimée au niveau des bords sur la face tournée vers l'habitable. Ces bandes marginales décoratives 4, 5 ont une largeur d'environ 5 à 15 mm et sont faites, par exemple, d'une encre à cuire, qui est cuite au cours du chauffage des feuilles de verre nécessaire pour le bombage et/ou la trempe des feuilles de verre 2, 3. Dans le cas de la bande marginale décorative 5 sur la feuille de verre 3, il peut également s'agir, au lieu de cela, d'une encre ou d'une laque qui ne nécessite aucune opération de cuisson. Comme cette bande marginale décorative 5 se trouve à l'intérieur du vitrage feuilleté, elle n'est pas en contact avec l'atmosphère et donc, elle ne doit pas présenter la même résistance aux influences atmosphèriques que la bande marginale décorative 4. Des trous 6 peuvent être pratiqués au niveau du bord inférieur du vitrage feuilleté pour la fixation du lève-vitre.

Un stratifié 8 à plusieurs couches est disposé entre les deux feuilles de verre 2 et 3 et est uni à ces dernières. Le stratifié 8 comprend un film support 10, par exemple de téréphtalate polyéthylène (PET) de 0,1 mm d'épaisseur, qui est pourvu sur une de ses surfaces d'une couche superficielle 11 réfléchissant le rayonnement infrarouge, ainsi que les deux feuilles 12 et 13 de chaque fois 0,4 mm d'épaisseur environ faites d'un polymère thermoplastique, en particulier du polyvinylbutyral.

Dans le cas du revêtement superficiel 11 réfléchissant la chaleur, il s'agit, par exemple, d'un empilement de couches avec une couche fonctionnelle d'argent d'environ 10 mm d'épaisseur, qui est disposée entre des couches antireflet diélectriques faites d'un oxyde métallique ou semi-conducteur et le cas échéant, des couches de protection métalliques minces. Les différentes couches constituant la couche superficielle 11 sont déposées habituellement suivant le procédé de pulvérisation cathodique assistée par champ magnétique sur le film de support 10, et le film de support 10 pourvu ainsi de l'empilement de couches 11 est ensuite associé à deux feuilles de polyvinylbutyral 12, 13. Ce type de stratifié appartient à l'état de la technique.

A une distance A de, par exemple, 4 mm de la surface périphérique 14 du vitrage feuilleté, la couche d'argent située à l'intérieur de l'empilement de couches est pourvue, le long des bords latéraux et du bord supérieur, d'une ligne de séparation 16 large d'environ 0,2 mm. Une telle ligne de séparation n'est pas nécessaire le long du bord inférieur du vitrage feuilleté, parce que la zone inférieure de la vitre de portière à manivelle est cachée dans le puit de la portière, de sorte que la corrosion marginale dans cette zone ne gêne pas. Comme cela ressort des dessins, la ligne de séparation 16 et la zone marginale située à l'extérieur de la ligne de séparation 16 sont couvertes par les bandes marginales décoratives 4, 5 de telle sorte que des modifications de couche résultant de la corrosion ne soient pas visibles.

La ligne de séparation 16, dans le cas de l'exemple de réalisation représenté, est tracée avant la fabrication du vitrage feuilleté, en posant le stratifié 8 sur un support approprié, en focalisant un faisceau laser sur le plan de la couche métallique 11 et en guidant le laser le long de la ligne souhaitée sur le stratifié.

Une installation pour la réalisation automatique d'une telle ligne de séparation est représentée dans son ensemble sur la figure 3. Elle comprend un laser He-Ne 18 d'une puissance de 30 W et une tête déviatrice de la lumière 19 avec un système optique de focalisation 20. Le rayonnement laser est acheminé par l'intermédiaire d'une fibre optique 21 jusqu'à la tête déviatrice de la lumière 19. La tête déviatrice de la lumière 19 est disposée sur un chariot en croix non représenté en tant que tel, qui est entraîné dans la direction X et dans la direction Y par un circuit de commande 22 à programme enregistré conformément au programme de déplacement souhaité. Le stratifié 8 à traiter se trouve en-dessous de la tête déviatrice du rayonnement 19 sur la table 23. Après le traçage de la ligne de séparation, le stratifié est ensuite transformé directement en vitrage feuilleté ou stocké provisoirement jusqu'à la transformation ultérieure.

Dans le cas de la réalisation du vitrage feuilleté représenté sur les figures 1 et 2, la ligne de séparation doit être tracée avant que le vitrage feuilleté ne soit fabriqué. Cela est nécessaire parce que sinon, le rayon laser serait absorbé par les bandes marginales décoratives 4 ou 5. Toutefois, si une bande marginale décorative seulement est prévue, de sorte qu'une des deux feuilles de verre est totalement transparente au bord, ou si le vitrage feuilleté ne présente pas du tout de bande marginale décorative, la ligne de séparation peut également être tracée ultérieurement sur le vitrage feuilleté achevé, en focalisant le faisceau laser à travers une feuille de verre sur la couche réfléchissant le rayonnement infrarouge et en guidant la tête déviatrice de la lumière19 sur le vitrage feuilleté achevé au niveau de son bord.

L'opération de découpe au laser peut donc s'effectuer sur le stratifié comportant l'ensemble de ses feuilles de polymère, « complet », ou sur le vitrage feuilleté après assemblage. Il va de soi que l'on reste dans le cadre de l'invention en opérant cette découpe au laser sur un stratifié qui serait « incomplet », qui ne contiendrait qu'au moins la feuille de polymère fonctionnalisée et auquel, après découpe, on viendrait ajouter la ou les feuilles, éléments « manquants ».

## Revendications

1. Procédé pour la fabrication d'un vitrage feuilleté réfléchissant des rayons thermiques comportant au moins deux feuilles de verre et au moins une feuille de polymère disposée entre ces feuilles de verre, assemblée à ces dernières et pourvue d'au moins une couche fonctionnelle réfléchissant le rayonnement infrarouge, qui s'étend au moins le long d'une partie de la périphérie du vitrage jusqu'à son bord, **caractérisé en ce que**
l'on utilise un stratifié préfabriqué (8) constitué d'au moins un film de polymère revêtu (10) et de deux feuilles d'assemblage thermoplastiques (12 et 13),
l'on trace une ligne de séparation (16) interrompant la couche fonctionnelle au moins sur une partie de la périphérie du vitrage qui s'étend à une distance parallèlement au bord du vitrage, à l'aide d'un faisceau laser qui traverse une feuille d'assemblage (12 ou 13) à l'intérieur du stratifié (8),
et ensuite on transforme le stratifié (8) et les feuilles de verre (2, 3) en vitrage feuilleté (1).

2. Procédé pour la fabrication d'un vitrage feuilleté réfléchissant des rayons thermiques comportant au moins deux feuilles de verre et au moins une feuille de polymère disposée entre ces feuilles de verre, assemblée à ces dernières et pourvue d'au moins une couche fonctionnelle réfléchissant le rayonnement infrarouge, qui s'étend au moins le long d'une partie de la périphérie du vitrage jusqu'à son bord, **caractérisé en ce que**
l'on fabrique un vitrage feuilleté en liant les feuilles de verre au film de polymère revêtu (10) avec deux feuilles d'assemblage thermoplastiques (12 et 13),
puis l'on trace une ligne de séparation (16) interrompant la couche fonctionnelle au moins sur une partie de la périphérie du vitrage qui s'étend à une distance parallèlement au bord du vitrage, à l'aide d'un faisceau laser focalisé sur la couche (11) réfléchissant le rayonnement infrarouge après avoir traversé une feuille de verre (2, 3) et une feuille d'assemblage (12 ou 13).

3. Procédé selon la revendication 1 ou 2, **caractérisé en ce que** la ligne de séparation (16) est large de 0,05 à 1,0 mm.

4. Procédé selon l'une des revendications 1 à 3, **caractérisé en ce que** la ligne de séparation (16) s'étend à une distance de 2 à 10 mm parallèlement au bord du vitrage, en particulier de 3 à 5 mm.

5. Procédé selon l'une des revendications précédentes, **caractérisé en ce qu'**on dispose sur au moins une feuille de verre (2, 3) un cadre décoratif en forme de bande (4, 5) constitué d'une couche opaque, couvrant la zone marginale de la couche réfléchissant le rayonnement infrarouge située à l'extérieur de la ligne de séparation (16).

6. Procédé selon l'une des revendications précédentes, **caractérisé en ce que** la couche fonctionnelle réfléchissant le rayonnement infrarouge est une couche à base d'argent, qui est disposée entre des couches diélectriques faites d'un oxyde métallique ou semi-conducteur et le cas échéant, des couches minces faites d'un métal réactif.

7. Procédé selon la revendication 6, **caractérisé en ce que** la couche fonctionnelle à base d'agent a une épaisseur de 8 à 12 nm.

8. Procédé selon l'une des revendications précédentes, **caractérisé en ce que** les feuilles de verre (2, 3) sont faites de verre partiellement trempé.

9. Procédé selon la revendication 8, pour fabriquer un vitrage conçu comme une vitre de portière réglable en hauteur, dans lequel la ligne de séparation (16) ainsi que le cadres décoratif opaque (4, 5) sont prévus le long des bords latéraux et du bord supérieur du vitrage feuilleté.

10. Procédé selon l'une des revendications précédentes, **caractérisé en ce que** l'on utilise un laser He-Ne.

11. Procédé selon l'une des revendications précédentes, **caractérisé en ce que** l'on utilise un laser d'une puissance de 30W.

## Claims

1. Method for manufacturing laminated glazing reflecting heat rays, comprising at least two sheets of glass and at least one sheet of polymer disposed between these sheets of glass, connected to the latter and provided with at least one functional layer reflecting infrared radiation, which extends at least along part of the periphery of the glazing as far as its edge, **characterised in that**
a prefabricated laminate (8) is used, consisting of at least one coated polymer film (10) and two thermoplastic connecting sheets (12 and 13),
a separation line (16) is traced, interrupting the functional layer at least on part of the periphery of the glazing which extends at a distance parallel to the edge of the glazing, by means of a laser beam which passes through a connecting sheet (12 or 13) inside the laminate (8),
and next the laminate (8) and the sheets of glass (2, 3) are converted into laminated glazing (1).

2. Method for manufacturing laminated glazing reflecting heat rays, comprising at least two sheets of glass and at least one sheet of polymer disposed between these sheets of glass, connected to the latter and provided with at least one functional layer reflecting infrared radiation, which extends at least along part of the periphery of the glazing as far as its edge, **characterised in that**
a laminated glazing is manufactured by connecting the sheets of glass to the coated polymer film (10) with two thermoplastic connecting sheets (12 and 13),
then a separation line (16) is traced, interrupting the functional layer at least on part of the periphery of the glazing which extends at a distance parallel to the edge of the glazing, by means of a laser beam focused on the layer (11) reflecting infrared radiation after having passed through a sheet of glass (2, 3) and a connecting sheet (12 or 13).

3. Method according to Claim 1 or 2, **characterised in that** the separation line (16) is 0.05 to 1.0 mm wide.

4. Method according to one of Claims 1 to 3, **characterised in that** the separation line (16) extends at a distance of 2 to 10 mm parallel to the edge of the glazing, in particular 3 to 5 mm.

5. Method according to one of the preceding claims, **characterised in that** there is disposed on at least one sheet of glass (2, 3) a decorative frame in the form of a strip (4, 5) consisting of an opaque layer, covering the marginal area of the glass reflecting infrared radiation situated outside the separation line (16).

6. Method according to one of the preceding claims, **characterised in that** the functional layer reflecting infrared radiation is a layer based on silver, which is disposed between dielectric layers made from a metallic or semiconductor oxide and where applicable thin layers made from a reactive metal.

7. Method according to Claim 6, **characterised in that** the functional layer based on silver has a thickness of 8 to 12 nm.

8. Method according to one of the preceding claims, **characterised in that** the sheets of glass (2, 3) are made from partially toughened glass.

9. Method according to Claim 8, for manufacturing a glazing designed as a door window adjustable for height, in which the separation line (16) and the opaque decorative frames (4, 5) are provided along the lateral edges and the top edge of the laminated glazing.

10. Method according to one of the preceding claims, **characterised in that** an He-Ne laser is used.

11. Method according to one of the preceding claims, **characterised in that** a laser with a power of 30 W is used.

## Patentansprüche

1. Verfahren zum Herstellen einer Wärmestrahlen reflektierenden Verbundglasscheibe, bestehend aus wenigstens zwei Glasscheiben und wenigstens einer Polymerfolie, die zwischen den Glasscheiben angeordnet, mit diesen verbunden und mit wenigstens einer infrarote Strahlung reflektierenden Funktionsschicht versehen ist, die sich mindestens entlang einer Seite des Scheibenumfangs bis zu deren Rand erstreckt, **dadurch gekennzeichnet, dass** ein vorgefertigtes Laminat (8), bestehend aus mindestens einer beschichteten Polymerfolie (10) und zwei thermoplastischen Klebefolien (12und 13), verwendet wird, (dass) man mit Hilfe eines Laserbündels, das eine Klebefolie (12oder 13) im Innern des Verbundes (8) durchdringt, eine Trennlinie (16) mit einem parallelen Abstand zum Scheibenrand zieht, die die Funktionsschicht auf mindestens einem Teil des Scheibenumfangs durchtrennt, und dass man anschließend das, Laminat (8) und die Glasscheiben (2, 3) zu Verbundglas (1) verarbeitet.

2. Verfahren zum Herstellen einer Wärmestrahlen reflektierenden Verbundglasscheibe, bestehend aus wenigstens zwei Glasscheiben und wenigstens einer Polymerfolie, die zwischen den Glasscheiben angeordnet, mit diesen verbunden und mit wenigstens einer infrarote Strahlung reflektierenden Funktionsschicht versehen ist, die sich mindestens entlang einer Seite des Scheibenumfangs bis zu deren Rand erstreckt, **dadurch gekennzeichnet, dass** man durch Verbinden der Glasscheiben mit der beschichteten Polymerfolie (10) mit zwei thermoplastischen Klebefolien (12 und 13) ein Verbundglas herstellt, anschließend mit Hilfe eines auf die infrarote Strahlung reflektierende Schicht fokussierten Laserbündels eine sich mit einem parallelen Abstand zum Scheibenrand erstreckende Trennlinie (16) zieht, die die Funktionsschicht auf mindestens einem Teil des Scheibenumfangs unterbricht, nachdem es eine Glasscheibe (2, 3) und eine Klebefolie (12 oder 13) durchdrungen hat.

3. Verfahren nach Anspruch 1 oder 2, **dadurch gekennzeichnet, dass** die Trennlinie (16) zwischen 0,05 und 1,0 mm breit ist.

4. Verfahren nach einem der Ansprüche 1 bis 3, **dadurch gekennzeichnet, dass** sich die Trennlinie (16) mit einem Abstand von 2 bis 10 mm insbesondere zwischen 3 bis 5 mm, parallel zum Scheibenrand, erstreckt.

5. Verfahren nach einem der vorhergehenden Ansprüche, **dadurch gekennzeichnet, dass** auf wenigstens einer Glasscheibe (2, 3) ein streifenförmiger Dekorrahmen (4,5), bestehend aus einer lichtundurchlässigen Schicht, die den Randbereich der infrarote Strahlung reflektierenden Schicht, außerhalb der Trennlinie (16) verdeckt, aufgebracht ist.

6. Verfahren nach einem der vorhergehenden Ansprüche, **dadurch gekennzeichnet, dass** die infrarote Strahlung reflektierende Funktionsschicht eine Schicht auf Silberbasis ist, die zwischen dielektrischen Schichten aus Metalloxid oder Halbleiteroxid und gegebenenfalls dünnen Schichten aus einem reaktiven Metall angeordnet ist.

7. Verfahren nach Anspruch 6, **dadurch gekennzeichnet, dass** die Funktionsschicht auf Silberbasis eine Dicke von 8 bis 12 nm hat.

8. Verfahren nach einem der vorhergehenden Ansprüche, **dadurch gekennzeichnet, dass** die Glasscheiben (2, 3) aus teilvorgespanntem Glas bestehen.

9. Verfahren nach Anspruch 8, zum Herstellen einer als höhenverstellbare Fensterscheibe vorgesehene Scheibe, bei dem die Trennlinie (16) ebenso wie der undurchsichtige Dekorrahmen entlang den Längsseiten und dem oberen Rand vorgesehen werden.

10. Verfahren nach einem der vorhergehenden Ansprüche, **dadurch gekennzeichnet, dass** ein He-Ne Laser benutzt wird.

11. Verfahren nach einem der vorhergehenden Ansprüche, **dadurch gekennzeichnet, dass** ein Laser mit einer Leistung von 30W benutzt wird.
